# EUROPÄISCHE PATENTANMELDUNG

(11) **EP 4 379 626 A1**
(43) Veröffentlichungstag der Anmeldung: **05.06.2024**
(21) Anmeldenummer: 22210586.8
(22) Anmeldetag: 30.11.2022
(51) Int. Cl.: G06Q 10/0639, G06Q 30/0201, G16Y 20/20, G16Y 40/20

(54) **VERFAHREN ZUM LEBENSDAUERMANAGEMENT EINES PRODUKTES**

(71) Anmelder: Siemens Aktiengesellschaft, 80333 München (DE)
(72) Erfinder: Schuh, Carsten, 85598 Baldham (DE); Soller, Thomas, 94469 Deggendorf (DE)
(74) Vertreter: Siemens Patent Attorneys

(57) **Zusammenfassung**

Die Erfindung betrifft ein Verfahren zum Lebensdauermanagement eines Produktes (2), umfassend folgende Schritte:
- Erstellen von Konstruktionsdaten (8) für das Produkt (2),
- Herstellen wenigstens eines Einzelproduktes (4) aus Vorprodukten (6) basierend auf den Konstruktionsdaten (8), wobei dem Einzelprodukt (4) eine Kommunikationsschnittstelle (10) beigefügt wird,
- Erstellen einer digitalen Repräsentation (12) des Produktes umfassend mindestens ein Simulationsmodell,
- Einbringen von Materialdaten (14) und Prozessdaten (16), aus Vorprodukten (6) und dem Einzelprodukt (4) sowie auch der Konstruktionsdaten (8) in die Repräsentation (12),
- Herstellen einer Datenverbindung (18) zwischen dem Einzelprodukt (4) und der Repräsentation (12),
- Übertragen von Lebenszyklusinformationen (20) des Einzelproduktes (4) während seines Lebenszyklus an die Repräsentation (12), wobei die Summe der Lebenszyklusinformationen (20) der Einzelprodukte (4) zusammen mit den Materialdaten (14), Prozessdaten (16) und Konstruktionsdaten (8) Produktdaten (22) ergeben,
wobei weiterhin die digitale Repräsentation (12) verwendet wird, um folgende Schritte durchzuführen:
- Berechnung von Materialanforderungen mittels des Simulationsmodells für definierte Produktfunktionen unter Verwendung der Lebenszyklusinformationen (20)
- Festlegen eines physikalischen Grenzwertes zur Gewährleistung der Produktfunktionen auf Basis der berechneten Materialanforderungen
- Ermittlung des Materialbedarfs an Produktbereichen (24) zur Gewährleistung des Grenzwertes
- Erstellen von Produktdaten eines zweiten Produktes (3) mit dem ermittelten Materialbedarf
- Herstellen eines zweiten Einzelproduktes (5) auf Basis der Produktdaten des zweiten Produktes.

## Beschreibung

Der Produktlebenszyklus eines Bauteils orientiert sich aktuell an einem linearen, gesteuerten Wertstrom. Dieser umfasst z.B. in der gegebenen Reihenfolge die Spezifikationen (Last-/Pflichtenheft), das Design, den Herstellungsprozess, die Inspektion und/oder die Endkontrolle. Es folgt die Nutzungsphase mit möglichen Reparaturen und abschließend der Verwurf und/oder das Recycling. Bei keinem der genannten Punkte ist eine Feedback- oder Regelungsschleife für die Produktoptimierung vorgesehen. Offenbaren sich dann innerhalb der Produktlebensdauer Fertigungs-, Qualitäts-, oder Lebensdauerprobleme, dann wird die weitere Herstellung bzw. der Verkauf des Produktes vorübergehend gestoppt, und Experten entscheiden offline über zu ergreifende Maßnahmen. Gleiches gilt analog für die teilweise erst nach Jahrzehnten anstehende Reparatur und das Recycling bzw. den Verwurf von Bauteilen und Systemen.

Insbesondere um dabei Performanz- und Lebensdauerproblemen vorzubeugen, werden in der Designphase des Produktes normalerweise sogenannte Sicherheitsfaktoren mit einkalkuliert, d.h. die Beanspruchbarkeit des (dahingehend auszuwählenden) Materials oder der Konstruktion wird um einen gewissen Faktor höher angesetzt als die zu erwartenden tatsächlichen Belastungen. Dies gilt z.B. für Zugfestigkeiten, Dauerschwingfestigkeiten, Korrosionsbeständigkeit, Abriebfestigkeit etc.. Der Faktor wird teils aus regulatorischen oder normativen (Sicherheits-)Anforderungen, großteils aber auch aufgrund unzureichender oder unvollständiger Kenntnis der tatsächlich auftretenden Beanspruchungen gewählt. Diese Vorgehensweise senkt zwar die vorzeitige Ausfallrate von Produkten, führt aber auch zu einem signifikanten "Overengineering" v.a. bei Produkten, die im industriellen und medizinischen Bereich, im militärischen und Infrastruktur-Sektor sowie in anderen sicherheitsrelevanten Bereichen Anwendung finden.

Bei Auftreten von Fertigungs- und Qualitätsproblemen wird heute der zuständige Entwicklungsbereich informiert, welcher dann über eine Änderung oder Anpassung einzelner Prozessschritte entscheidet, das Material oder die verwendeten Werkzeuge anpasst, Kontakt mit dem Kunden bzgl. einer Änderung des Pflichtenheftes aufnimmt oder Sonderfreigaben erteilt. Bei Auftreten von Betriebsproblemen wird analog dazu verfahren, bis hin zur Abschaltung der Systeme oder der Anlagen. Gewonnene Erkenntnisse werden - abgesehen von Notfallsituationen - des Weiteren oftmals nicht unmittelbar in das Design bzw. die Fertigungsprozesse überführt, sondern erst gesammelt in der nächsten Produkt-Revision bzw. entsprechenden Designto-Cost-Maßnahmen berücksichtigt, was mitunter zu mehrjährigen Verzögerungen in der Implementierung bereits vorzeitig bekannter Verbesserungshebel führt.

Die Aufgabe der Erfindung besteht darin, ein Verfahren zum Lebensdauermanagement eines Produktes bereitzustellen, das gegenüber dem Stand der Technik dazu geeignet ist, den Materialbedarf zu reduzieren und somit Ressourcen für das Gesamtprodukt einzusparen.

Die Lösung der Aufgabe besteht in einem Verfahren mit den Merkmalen des Anspruchs 1 zum Lebensdauermanagement eines Produktes, umfassend folgende Schritte:
- Erstellen von Konstruktionsdaten für das Produkt,
- Herstellen wenigstens eines Einzelproduktes aus Vorprodukten basierend auf den Konstruktionsdaten, wobei dem Einzelprodukt eine Kommunikationsschnittstelle beigefügt wird,
- Erstellen einer digitalen Repräsentation des Produktes,
- Einbringen von Materialdaten und Prozessdaten aus Vorprodukten und dem Einzelprodukt sowie auch der Konstruktionsdaten in die Repräsentation,
- Herstellen einer Datenverbindung zwischen dem Einzelprodukt und der Repräsentation,
- Übertragen von Lebenszyklusinformationen des Einzelproduktes während seines Lebenszyklus an die Repräsentation, wobei die Summe der Lebenszyklusinformationen der Einzelprodukte zusammen mit den Materialdaten, Prozessdaten und Konstruktionsdaten Produktdaten ergeben,
   wobei weiterhin die digitale Repräsentation verwendet wird, um folgende Schritte durchzuführen:
   - Berechnung von Materialanforderungen für definierte Produktfunktionen unter Verwendung der Lebenszyklusinformationen
   - Berechnung eines physikalischen Grenzwertes zur Gewährleistung der Produktfunktionen mittels der berechneten Materialanforderungen
   - Ermittlung des Materialbedarfs an Produktbereichen zur Gewährleistung des Grenzwertes
   - Erstellen von Produktdaten eines zweiten Produktes mit dem ermittelten Materialbedarf,
   - Herstellen eines zweiten Einzelproduktes auf Basis der Produktdaten des zweiten Produktes.

Die vorliegende Erfindungsmeldung gibt somit eine Lösung an, mit der über die konsequente Nutzung datengestützter Simulations-, Beurteilungs- und Entscheidungsprozesse adaptive Regelkreise (offline-feedback) auf Basis eines ständig aktualisierten 3D-Realmodells in Form der digitalen Repräsentation entlang des gesamten Lebenszyklus eines Bauteils oder eines Produktsystems etabliert werden können, mit der Wirkung, mittels der in der Herstellungs- und Nutzungsphase gewonnenen Realdaten eine zeitnahe und wissensbasierte Anpassung bzw. Optimierung des Produktdesigns und der Materialauswahl sowie der zur Anwendung kommenden Fertigungs-, Reparatur- sowie ggf. Recyclingprozesse zu erreichen, und so die erforderlichen Sicherheitsfaktoren bei der Designauslegung minimieren zu können.

Unter Anwendung des Verfahrens lässt sich der Grenzwert auf einen Faktor 1,3 bis 1,9 reduzieren. Wobei eine weitere vorteilhafte Ausgestaltungsform der Erfindung darin besteht, dass in der digitalen Repräsentation ein Kriterium hinterlegt ist, wonach die Materialanforderungen in der Art berechnet werden, dass die jeweilige definierte Produktfunktion mindestens für 99% der Einzelprodukte während der Lebensdauer erfüllt wird. Zusammen mit dem genannten Grenzwert, der den entsprechenden Faktor größer ist als die bestimmte Materialanforderung, kann somit eine Sicherheit für die Gewährleistung der Produktfunktion geschaffen werden, die nahezu 100 % beträgt, wobei der hierfür benötigte Materialbedarf gegenüber herkömmlicher Ausgestaltung mit dem selben Sicherheitswert deutlich reduziert ist.

Die zur Beschreibung der Erfindung und ihrer vorteilhaften Ausgestaltungsformen verwendeten Begriffe sind dabei wie folgt definiert und mit Beispielen versehen:
Produkt: Eine Serie eines bestimmten Produkttyps, zu dem eine Vielzahl von Einzelprodukten gehört. Hierzu wird das Produkt zunächst abstrakt definiert und mit üblichen Konstruktionsverfahren konstruiert. Dies wird allgemein als Spezifikationsprozess bezeichnet, hierzu gehören beispielsweise, aber nicht abschließend, ein Lastenheft, ein Pflichtenheft sowie Konstruktionstools wie CAE/CAD/CAM. Möglichst alle Informationen aus dem Spezifikationsprozess werden in die digitale Repräsentanz geladen. Hierzu erstellte Daten sind Konstruktionsdaten. Konstruktionsdaten sind daneben insbesondere die Daten, die die physische Darstellung des Produktes umfassen, beispielsweise seine geometrischen Formen, aber auch Spezifikationen von verwendeten Bauteilen oder Teilprodukten, Eigenschaften und Spezifikationen von verwendeten Werkstoffen. Die Konstruktionsdaten werden in die digitale Repräsentation eingebracht.

Die digitale Repräsentation kann auch als ein digitaler Zwilling eines Konstruktions- und/oder Fertigungsprozesses
und/oder Nutzungsprozesses und/oder des gesamten Lebenszyklus eines Produktes angesehen werden. Die digitale Repräsentation kann dabei Konstruktionsvorgänge umfassen, die beispielsweise durch ein CAD-System erfolgen. Sie kann aber auch Fertigungssimulationen, die durch ein CAM-Verfahren erfolgen sowie die physische Fertigung des Produktes an sich umfassen. Bei der physischen Fertigung werden dabei wiederum Prozessdaten wie Prozessüberwachungsdaten von Sensoren und ihre Auswertungen oder das Einspannen eines Bauteilträgers oder die Positionierung und Reihenfolge einzelner Teilbauteile beim Zusammenbau eines Produktes erhoben.

Die digitale Repräsentation kann beispielsweise in Form eines Knowledge Graphs ausgestaltet sein, dieser dient dazu, Informationen zum Bauteil in semantische Relation zueinander zu setzen. Ein digitaler Zwilling im Allgemeinen wiederum ist eine digitale Repräsentation eines materiellen oder immateriellen Objekts oder Prozesses aus der realen Welt in der digitalen Welt. Digitale Zwillinge ermöglichen einen übergreifenden Datenaustausch. Sie sind dabei mehr als reine Daten und bestehen aus Modellen des repräsentierten Objekts oder Prozesses und können daneben Simulationen, Algorithmen und Services enthalten, die Eigenschaften oder Verhalten des repräsentierten Objekts oder Prozesses beschreiben, beeinflussen, oder Dienste darüber anbieten.

Semantische Relation: Hierunter sind u.a. örtliche Beziehungen, räumliche Beziehungen, beispielsweise zwischen einem Teil des Produktes während der Fertigung und einem Roboterarm, der zur Fertigung dient, zu verstehen. Ferner gehören Kausalitäten zu semantischen Relationen, wie beispielsweise die jeweilige Koordinatenbestimmung des Bauteils bezüglich eines Koordinatensystems zum jeweiligen Prozesszeitpunkt oder die während eines bestimmten Prozesszeitpunktes eingebrachte Energiemenge. Ferner können Lebenszyklusinformationen und ihre Auswirkung auf die Produkteigenschaften nach einer gewissen Nutzungsdauer Bestandteil der semantischen Relation sein. Eine Mehrzahl an semantischen Relationen ergeben semantische Verknüpfungen, die wiederum ein semantisches Muster umfassen können.

Vorprodukte sind Halbzeuge oder Teilbauteile, die prozesstechnisch zusammengesetzt das Einzelprodukt ergeben. Halbzeuge können beispielsweise Gussteile oder Stanzteile sein, die wiederum Bestandteile eines Gehäuses des Einzelproduktes sind. Teilbauteile sind beispielsweise Module, die bereits vorgefertigt sind, und zusammengesetzt das Einzelprodukt ergeben. Wäre das Einzelprodukt beispielsweise ein Fernsehgerät, so wären Teilbauteile hierfür beispielsweise das Display oder das CPU-Modul. Für alle Vorprodukte liegen eine Vielzahl von Spezifikationen vor, z.B. ermittelte Werkstoffeigenschaften von Halbzeugen oder Prüfprotokolle für das Display oder Daten. Diese Daten werden als Materialdaten oder Prozessdaten des Vorproduktes oder des daraus resultierenden Einzelproduktes bezeichnet. Die Materialdaten und Prozessdaten bilden zusammen mit den Konstruktionsdaten und den Lebenszyklusinformationen die Produktdaten, die in ihrer Gesamtheit in die Repräsentation eingebracht sind.

Prozessdaten und Materialdaten umfassen Qualitätsdaten und Funktionalitätsdaten. Qualitätsdaten können Daten über die Werkstoffqualität von Vorprodukten sein, insofern sind sie eine Teilmenge der Materialdaten. Sie können aber auch Informationen zur Passgenauigkeit beim Einbau von Vorprodukten sein, insofern zählen sie zu den Prozessdaten. Funktionalitätsdaten können aus der abschließenden Qualitätsprüfung des Einzelproduktes stammen. Insofern fallen sie unter die Prozessdaten. Sie können aber auch Informationen über die Funktionalität eines Werkstoffs sein, insofern sind sie Materialdaten.

Lebenszyklusinformationen sind Informationen über das Einzelprodukt, die während des Lebenszyklus beispielsweise mittels der Kommunikationsschnittstelle an die Repräsentation übermittelt werden. Dabei können diese Informationen zu Serviceleistungen am Einzelprodukt, Verschleißerscheinungen, Nutzungsdauer, Nutzungsart, Umgebungsbedingungen während der Nutzung, Belastungsbedingungen, Informationen zum Alterungszustand, Zeitpunkt bis zum Ausfall, Lagerhaltung und Informationen zum Recycling, Reparatur oder Verwurf sein.

Zur Übermittlung dieser Lebenszyklusinformationen ist die Kommunikationsschnittstelle von Bedeutung. Das individuelle Einzelprodukt muss während des Lebenszyklus identifiziert werden, so dass die Informationen eindeutig zuordenbar sind. Dabei hängt die Art der Kommunikationsschnittstelle von der Beschaffenheit und Komplexität des Produktes an sich ab. Bei einem Fernsehgerät, das einen LAN- oder WiFi-Anschluss besitzt, kann die Schnittstelle komplexer ausgestaltet sein und durch sie können intrinsische Informationen aus dem Einzelprodukt an die Repräsentation übertragen werden. Handelt es sich um ein Produkt, das beispielsweise rein mechanisch und/oder passiv wirkt, wie beispielsweise ein Autoreifen, ein Sturzhelm oder ein Stoßdämpfer, so können bereits RFID's oder lediglich aufgedruckte QR-Codes dazu dienen, das Einzelprodukt zu identifizieren und Informationen über dessen derzeitige Phase im Produktlebenszyklus abzugreifen und mittels einer zwischengeschalteten Kommunikationsvorrichtung Informationen an die Repräsentation zu übertragen. Bei weniger komplexen elektronischen Geräten wie beispielsweise einer Powerbank oder eines Elektrorasierers kann ein verbauter Chip die Kommunikationsschnittstelle bilden, der beim Verbinden des Einzelproduktes mit einem USB-Kabel Lebenszyklusinformationen ebenfalls an eine zwischengeschaltete Kommunikationsvorrichtung übermittelt.

Materialanforderungen sind Materialeigenschaften, zum Beispiel Festigkeitswerte, die das Produkt in bestimmten Bereich benötigt, damit die Produktfunktionen gewährleistet sind. Diese Materialanforderungen können beispielsweise die maximale Biegefestigkeit an einem besonders belasteten Punkt sein. Sie können aber auch durch Dauerfestigkeit oder Abriebfestigkeit bestimmt sein. Andere physikalische Größen außer der Festigkeit, die mittels des Grenzwertes zu beschreiben sind, können z. B. die Temperaturbeständigkeit oder die Wärmeleitfähigkeit sein. Unter die physikalischen Größen, die mit dem Grenzwert bestimmt sind, können auch elektrische Größen wie eine ausreichende und anhaltende elektrische Isolierung oder eine dauerhaft gewährleistete elektrische Leitfähigkeit verstanden werden.

Der Begriff Materialbedarf lässt sich in diesem Kontext somit in der Form definieren, dass einerseits bestimmte Materialstärken, was auch als Materialdicke bezeichnet werden kann, zur Gewährleistung des Grenzwertes eingestellt werden. Andererseits kann der Materialbedarf sich auch auf die Materialeigenschaften beziehen, so kann beispielsweise Stahl durch Aluminium ersetzt werden, da durch die Durchführung des Verfahrens Grenzwerte ermittelt werden, die ein anderes Material zur Gewährleistung des ermittelten Grenzwertes ermöglichen.

Allgemein vorteilhaft kann es sich bei dem Simulationsmodell um ein insbesondere multiphysikalisches Simulationsmodell handeln, bei welchem Phänomene aus mehreren physikalischen Domänen berücksichtigt werden. So können beispielsweise neben Effekten der strukturellen Mechanik auch thermische, fluiddynamische, chemische und/oder elektrische Zusammenhänge in dem Modell berücksichtigt sein. Durch ein solches multiphysikalisches Modell wird bewirkt, dass bei der Simulation die Zusammenhänge zwischen den mechanischen Vorgängen insbesondere beim Betrieb des Produktes oder an dem Bauteil und den fluiddynamischen, thermischen chemischen und/oder elektrischen Wechselwirkungen ausreichend berücksichtigt werden. Mit anderen Worten handelt es sich um ein gekoppeltes Simulationsmodell, welches zumindest die strukturell-mechanische Domäne und bevorzugt zusätzlich wenigstens einen weiteren physikalischen Aspekt einer Bauteilbelastung beschreibt. Die Simulation im Schritt zur "Berechnung von Materialanforderungen" beruht dann auf der Verwendung dieses Modells, und sie wird insbesondere computergestützt durchgeführt. Dabei können vorteilhaft numerische Methoden zur Lösung von gekoppelten Differentialgleichungssystemen aus diesen verschiedenen physikalischen Domänen zum Einsatz kommen. Besonders vorteilhaft kann es sich dabei um Diskretisierungsmethoden handeln, beispielsweise um die Finite-Elemente-Methode, die Finite-Differenzen-Methode oder die Finite-Volumen-Methode.

Vorteilhafte Ausgestaltungsformen und Beispiele weiterer Merkmale der Erfindung werden anhand der folgenden Figuren und Spezialbeschreibung näher erläutert. Dabei handelt es sich um teilweise vereinfachte und schematisierte Beispiele oder um konkrete Ausführungsformen, die keine Einschränkung des Schutzbereiches darstellen.

Dabei zeigen:
- Figur 1: einen schematischen Ablauf eines Verfahrens zum Lebensdauermanagement eines Produktes am Beispiel einer Waschmaschine und
- Figur 2: einen erweiterten Ablauf des Verfahrens unter Generierung eines zweiten Produktes.

Eine digitale Repräsentation (digitaler Zwilling), die man auch als 3D-Realmodell bezeichnen kann, ist im Folgenden beschrieben als ein möglichst vollumfängliches digitales Abbild eines Bauteils oder eines Produktes entlang der Wertschöpfungskette bzw. des Lebenszyklus (Product Lifecycle). Dies umfasst beispielsweise aber nicht abschließend den Spezifikationsprozess, CAE/CAD/CAM(/CAQ), Produktion, Feldeinsatz, ggf. Reparatur bis hin zum Recycling oder der Verschrottung. Dabei enthält die digitale Repräsentation alle für das Bauteil oder Produkt im Lebenszyklus wesentlichen Informationen, beginnend mit dem Lasten- und/oder Pflichtenheft, der CAE-Auslegung, Computer Aided Design (CAD)-Modell, Computer Aided Manufacturing (CAM)-Routine, Materialliste (BOM), Prozessliste (BOP), kritische Materialeigenschaften relevanter Material- und Fertigungsdaten (z.B. Materialbatch, Materialhistorie, Details zu den einzelnen Prozessschritten wie Maschinen, Werker, Werkzeuge inkl. deren Historie, Realgeometrien, besondere Vorkommnisse während der Produktion (Rework), Q-Daten (inkl. Historie, Details zur Durchführung, ausführende Personen), Lagerzeiten, Feldeinsatz (inkl. Details zum Einbauort und der Belastungen während Laufzeit), ggf. Inspektionsdaten, Reparatur und Zweiteinsatz, und Weiteres.

Zudem wird nun ein adaptiver offline-Regelkreis beschrieben, der sich aus der digitalen Repräsentation des Bauteils oder Produktes und gegebenenfalls einem mittels künstlicher Intelligenz (KI, AI) befähigten Simulations-, Beurteilungs- und Entscheidungsalgorithmus zusammensetzt.

Dabei wird die digitale Repräsentation mit Daten gespeist, welche sich aus sämtlichen relevanten Quellen entlang des Produktlebenszyklus ziehen lassen. Neben den in der Regel beim Produzenten der Ausgangsmaterialien und des Produzenten des Produktes verfügbaren Daten zu Eigenschaften der verwendeten Materialbatches, der Design-, Herstellungs- und Prüf/Freigabeprozesse sind hier vor allem Daten aus der Nutzungsphase des Bauteils oder Produktes relevant, welche sich u.a. durch online- und offline-Monitoring oder durch das Auslesen von Installations-, Ausfall- und Ausbau-, Verwurf- und/oder Rücknahmeprotokollen, z.B. auch durch Verwendung von Data-Matrix-Codes, sowie von Umwelt- und Metadaten generieren lassen.

Die Auswertung der Daten erfolgt dann in dem Simulations-, Beurteilungs- und Entscheidungsalgorithmus, der der digitalen Repräsentation zu Grunde liegt, der aufgrund der bei einem spezifischen Produkt oder einem Produktkonglomerat vorkommenden tatsächlichen, realen Produkteigenschaften und - performanzen, Material- und Herstellungs- (bzw. Reparatur- )toleranzen sowie der Nutzungs- und Belastungsszenarien neue Sicherheitsfaktoren berechnet, für die spezifischen zukünftigen Anwendungsszenarien simuliert und nochmals anpasst, und dann eine Modifikation des CAD-Designs (inkl. BOM / BOP), u.U. auch des Pflichtenheftes, erstellt, und Produktdaten hinsichtlich einer angepassten Materialauswahl und einer Änderung der Herstellungsprozesse vorgibt.

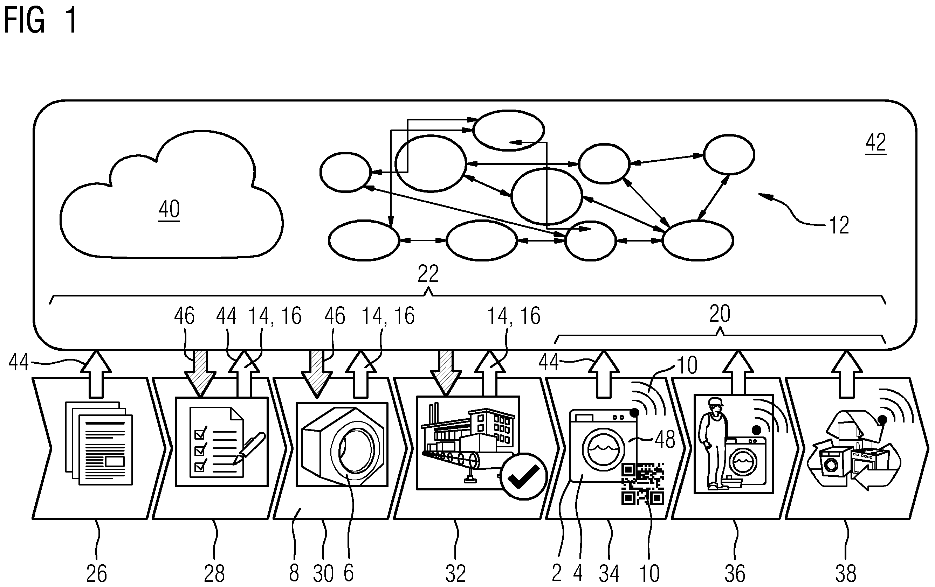

In Figur 1 ist ein Produktlebenszyklus eines beliebigen Produktes, hier beispielhaft dargestellt an einer Waschmaschine schematisch wiedergegeben. Dabei wird der Begriff Produkt 2 als der abstrakte Oberbegriff für die Vielzahl von Einzelprodukten 4, die individuell hergestellt werden, verwendet.

Das Produkt 2 ist in diesem Beispiel deshalb als Waschmaschine dargestellt, da es sich hierbei um ein anschauliches Objekt handelt, das im täglichen Leben in Verwendung ist. Das Produkt kann jedoch auch ein durchaus spezielleres Produkt wie zum Beispiel eine Industriesteuerung oder ein FrequenzUmrichter sowie eine Batteriezelle sein. Das Produkt kann jedoch auch ein anderes Produkt aus dem täglichen Leben wie beispielsweise ein Fernseher, ein PC oder ein Kraftwagen sein. Auch auf weniger komplexe Produkte, die insbesondere einem Verschleiß oder hohen mechanischen Belastungen ausgesetzt sind, kann das beschriebene Verfahren Anwendung finden. Dies können zum Beispiel Accessoires wie Taschen oder auch Schuhe oder beispielsweise eine Computermaus sein. Auch Teilprodukte von komplexen Produkten wie zum Beispiel Federsysteme eines Kraftwagens können durch das im Folgenden beschriebene Verfahren in ihrer Lebensdauer überwacht werden.

Zur Entwicklung des Produktes 2 wird zunächst ein Lastenheft 26 benötigt. Das Lastenheft umfasst insbesondere Funktionen, die das Produkt 2 erfüllen muss. Aus diesen wird Pflichtenheft 28 erstellt, mit dem alle technischen Anforderungen an das Produkt 2 festgelegt sind. Technische Anforderungen dieser Art sind beispielsweise Materialanforderungen, Festigkeiten und Lebensdauer. Im Weiteren werden in einem Konstruktionsschritt, beispielsweise in einem CAD-Verfahren 30, die technischen Anforderungen aus dem Pflichtenheft 28 so umgesetzt, dass das Produkt durch Konstruktionsdaten 8 virtuell entsteht. Hierbei können auch Vorprodukte 6, was am Beispiel einer Waschmaschine ein Elektromotor oder ein Lager oder Elektronikbauteile zur Steuerung der Waschmaschine sein können, ebenfalls durch das genannte CAD-Verfahren erstellt werden.

Sowohl das Lastenheft 26, das Pflichtenheft 28 und die CAD-Daten werden über einen Datenfluss 44 zu einer digitalen Repräsentation 12 geleitet. Die digitale Repräsentation 12, die auch als digitaler Zwilling bezeichnet werden kann, ist bevorzugt auf einem Computer 42 gespeichert, der zur Datenspeicherung gegebenenfalls auch eine Daten-Cloud 40 umfassen kann oder darauf zurückgreifen kann.

Neben dem CAD-Datenfluss könnten auch noch sogenannte CAM-Modelle, also Computer-Aided-Manufacturing-Modelle entwickelt werden und ebenfalls über den Datenfluss 44 an die digitale Repräsentation 12 übertragen werden. Nachdem das Produkt 2 inklusive aller Vorprodukte 6 konstruiert ist und Konstruktionsdaten 8 vorliegen, die ebenfalls auch Daten für die Herstellung bzw. den Herstellungsprozess 32 umfassen, kann die Produktion eines jeweiligen Einzelproduktes 4 erfolgen. Von den dabei anfallenden Prozessdaten werden bevorzugt alle oder alle möglichen ebenfalls über den Datenfluss 44 an die digitale Repräsentation weitergegeben.

Nach erfolgreicher Prüfung des Einzelproduktes 4 wird dieses an einen Kunden ausgeliefert und/oder in Betrieb genommen. Um weitere Informationen über die Einzelprodukte 4, die Teile des gesamten Produktes 2 sind, zu erhalten, ist es von Bedeutung, dass das Produkt 2 bzw. vertreten durch das Einzelprodukt 4 mit einer Kommunikationsschnittstelle 10 ausgestaltet ist. Die Kommunikationsschnittstelle 10 kann dabei je nach Art des Produktes sehr unterschiedlich ausgestaltet sein und dabei technisch sehr einfach bis sehr hochwertig konstruiert sein. Bei hochwertigen Produkten 2 wie beispielsweise einer Waschmaschine 48 aus dem vorliegenden Beispiel kann eine technische aufwändige Schnittstelle 10 beispielsweise eine WLAN Verbindung oder auch ein LAN Anschluss sein. Bei noch hochwertigeren Produkten oder bei Bedarf eines höheren Informationsflusses über das Einzelprodukt 4 kann auch der Einbau eines Mobilfunk-Moduls, beispielsweise eines GSM-Moduls, zweckmäßig sein. Eine weniger aufwändige Kommunikationsschnittstelle kann in Form eines RFID ausgestaltet sein, hier bedarf es im Gegenzug eines entsprechenden Sensors, der Daten vom RFID empfängt.

In noch einfacherer Form kann die Schnittstelle 10 in Form eines QR-Codes ausgestaltet sein. Hierzu bedarf es dann bei dem Auslesen von Informationen über das Produkt eines entsprechenden Lesegeräts für den QR-Code, beispielsweise ein Smartphone. Über den QR-Code können zwar keine direkten Produkteigenschaften des Einzelproduktes 4 übertragen werden, es können jedoch der Standort und die Nutzungssituation, in dem sich das Einzelprodukt 4 befindet, mittels des Ablesegerätes ermittelt werden. Eine Vielzahl derartiger Informationen, die so ermittelt werden, können ebenfalls für das Produkt 2 und die Anforderungen an dieses während der Lebensdauer von Nutzen sein, wie im Weiteren noch erläutert wird.

Während des Betriebes können durch die Kommunikationsschnittstelle 10 Informationen über die Nutzung des Einzelproduktes 4 an die digitale Repräsentation 12 übertragen werden. Solche Informationen können beispielsweise bezogen auf die Waschmaschine 48 die Anzahl der Waschvorgänge, die aufsummierte Anzahl der Umdrehungen der Trommel, Temperaturen an einem Lager oder Korrosion an Bauteilen, die beispielsweise durch Waschmittel einer erhöhten Korrosion ausgesetzt sind, sein. Für jede diese Produktfunktion ist es zweckmäßig, wenn ein entsprechender Sensor zur Ermittlung dieser Werte vorgesehen ist. Dies können Umdrehungssensoren sein, die induktiv arbeiten, es können zur Ermittlung von Temperaturen bzw. Wärmeinhalten Thermoelemente sein. Zur Messung von Korrosionen an Oberflächen können elektrische Leitfähigkeitsmessungen durchgeführt werden.

Sollte das Einzelprodukt 4 eine Reparatur benötigen, können während dieser Reparatur beispielsweise durch die reparierende Fachkraft zusätzliche Informationen über die Benutzung oder den Zustand des Einzelproduktes 4 über die Kommunikationsschnittstelle 10, allerdings auch über andere Kanäle, beispielsweise ein Smartphone, an die digitale Repräsentation übermittelt werden.

Auch Informationen zum Verwurf also der Verschrottung des Einzelproduktes 4 oder über ein mögliches angewendetes Recycling des Einzelproduktes 4 können über die Kommunikationsschnittstelle 10 bzw. auch hier ebenfalls über eine externe Schnittstelle an die digitale Repräsentation 12 übermittelt werden. Hier kann beispielsweise die Information darüber, wie viel Waschzyklen die Waschmaschine insgesamt bis zu ihrer Verschrottung oder zu ihrem Recycling durchgeführt hat, sowie das Alter bis zur Verschrottung, als wichtige Lebensdauerinformation übertragen werden. Auch die Information darüber, ob ein Recycling durchgeführt wird, kann für die Ermittlung eines tatsächlichen Materialbedarfs von Bedeutung sein.

Alle Informationen, die durch die Kommunikationsschnittstelle im Betrieb 34, oder während der Reparatur 36, oder zum Recycling 38 an die digitale Repräsentation 12 übermittelt werden, werden als Lebenszyklusinformationen 20 bezeichnet. Mit den Konstruktionsdaten 8, den Materialdaten 14 sowie Prozessdaten 16 werden alle so in die digitale Repräsentation 12 übertragenen Daten als Produktdaten 22 bezeichnet.

In der digitalen Repräsentation 12 sind neben den beschrieben gesammelten Produktdaten definierte Produktfunktionen hinterlegt, wobei Materialanforderungen zur Erfüllung dieser Produktfunktionen anhand der Produktdaten 22, insbesondere unter Einbeziehung der Lebenszyklusinformationen 20, berechnet werden.

Hierzu sei bezugnehmend auf die beispielhafte Waschmaschine 48 ein konkretes Beispiel für eine hinterlegte Produktfunktion gegeben. Ein hier nicht dargestelltes Lager für die Antriebswelle einer Waschmaschinentrommel darf aufgrund der verwendeten Materialien beispielsweise eine Temperatur von 80 °C nicht überschreiten. Hierfür ist das Lager ausgelegt und mit einer bestimmten Materialstärke versehen, die genügend Volumen aufweist, damit nach Abschätzungen und nach Erfahrungswerten der Konstrukteure kein Ausfall während der Lebensdauer auftritt. Es ist am Lager ein Temperatursensor angeordnet, der während des Betriebs der Waschmaschine 48 die Temperatur am Lager ermittelt und über die Kommunikationsschnittstelle 10 an die digitale Repräsentation 12 übermittelt. Für eine einzelne Waschmaschine 48 hat dieser singuläre Wert noch keine besondere Bedeutung für die Auslegung und die Konstruktion des Produktes 2 in Form der Waschmaschine 48. Wenn allerdings die Temperaturdaten an dem besagten Lager für mehrere 1000 Waschmaschinen 48, also Einzelprodukten 4, bei jeweils mehreren 100 Waschvorgängen an die digitale Repräsentation 12 übertragen werden, so kann ein in der Praxis auftretender Maximalwert der Produktfunktion "Temperatur am Lager" bestimmt werden.

Mittels der digitalen Repräsentation 12 kann auf diese Weise anhand von ca. 1 Million Waschvorgängen von mehreren 1000 baugleichen Einzelprodukten 4 der höchste auftretende Wert für diese Produktinformation, also für die Temperatur an dem Lager ermittelt werden. Darf beispielsweise aufgrund des verwendeten Materials eine Temperatur von 80° nicht überschritten werden, es treten jedoch bei den übertragenen Waschvorgängen nur Temperaturen bis 53 °C auf, so kann die Baugröße des Lagers verringert werden. Durch diese ermittelten Werte kann durch die Repräsentation, also den angewendeten digitalen Zwilling des Produkts 2, eine Umkonstruktion des Lagers erfolgen, die entweder ein alternatives Material umfasst, oder die mit weniger Material des ursprünglichen Werkstoffs auskommt.

Durch diese an diesem Beispiel beschriebene Maßnahme kann für eine Vielzahl von Produktfunktionen ein sogenanntes OverEngineering, also das Überdimensionieren von Bauteilen aus Sicherheitsgründen, reduziert werden.

Da aus den Lebenszyklusinformationen nur eine endliche Anzahl von Messwerten übertragen werden können, ist es insbesondere für sicherheitsrelevante Bauteile wichtig, einen physikalischen Grenzwert der Materialanforderung zur Gewährleistung der besagten Produktfunktion zu gewährleisten. Auch dieser Grenzwert ist in der Repräsentation 12 bezüglich der speziellen Produktfunktion hinterlegt und es wird auf Basis der auftretenden Anforderungen und dem hinterlegten Grenzwert eine geänderte Materialanforderung berechnet, die für einen sicheren Betrieb des Produktes 2 vonnöten ist. Die Lebenszyklusinformationen 20 können auch dazu beitragen, ein unterdimensioniertes Bauteil, also eine Schwachstelle zu erkennen. Durch Berechnung eines neuen Grenzwertes kann eine neue Auslegung des besagten Bauteils berechnet werden. Das beschriebene Verfahren dient also nicht nur zur Erkennung von Überdimensionierung, sondern auch zum Aufdecken von Schwachstellen.

Grundsätzlich ist es zweckmäßig, wenn die digitale Repräsentation 12 eine Vielzahl von zu überwachenden Produktfunktionen umfasst, die auf Basis der Lebenszyklusinformationen 20 kontinuierlich adaptiert werden. So kann beispielsweise bei einer Waschmaschine eine Anzahl von zwischen 50 und 150 Produktfunktionen, die überwacht werden, zweckmäßig sein. Produktfunktionen und Materialanforderungen beziehen sich dabei insbesondere auf Materialstärken, so dass durch das beschriebene Verfahren insbesondere Material, also Rohstoffe, eingespart werden können.

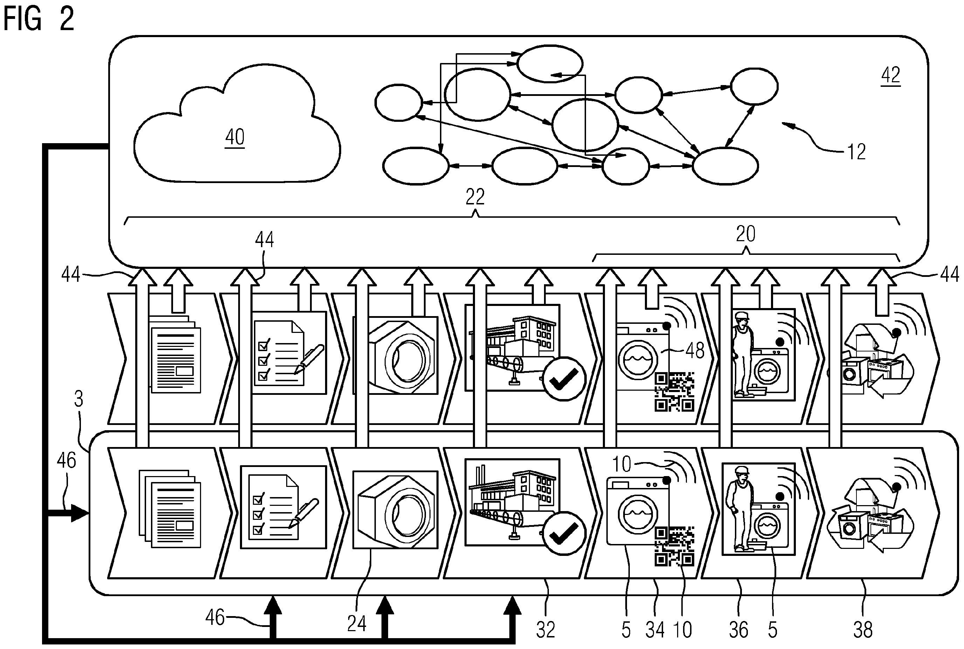

Durch die Änderung des ursprünglichen Grenzwertes in der digitalen Repräsentation wird ein neues, zweites Produkt 3 erzeugt. Dies ist in Figur 2 mittels des Pfeils 46, der den Datenfluss zur Adaption veranschaulicht, dargestellt. Auf diese Weise wird kontinuierlich während der Laufzeit des ersten Produktes dieses durch das zweite Produkt 3 ersetzt, aus dem wiederum eine Vielzahl von zweiten Einzelprodukten 5 hergestellt werden. Der Vorteil gegenüber herkömmlichen Konstruktionsmethoden, bei dem über eine längere Zeit Fehler, die aufgrund von Reklamationen dem Konstruktionsbüro mitgeteilt wurden, gesammelt werden und nach längerer Produktlaufzeit in einem neuen Produkt behoben werden, besteht darin, dass hier kontinuierlich neue Produkte auf Basis von automatisiert übertragenen Lebenszyklusinformationen 20 konstruiert werden und produziert werden. Durch jede vorgenommene Änderung entsteht wieder ein zweites Produkt 3, das sich von dem Vorgängerprodukt, dem dann jeweiligen Produkt 2 unterscheidet.

Zur Vermeidung von Produktausfällen ist es zweckmäßig, wenn der Grenzwert höher ist als die tatsächlich ermittelten Materialanforderungen. Der Grenzwert sollte in einem Bereich zwischen dem 1,3fachen und im 1,9fachen eines Wertes der berechneten Materialanforderung liegen. Wobei für die Materialanforderung bevorzugt ein Wert herangezogen wird, in dem mindestens 99 % der Einzelprodukte die festgelegten Produktfunktionen erfüllen. Multipliziert man den Wert von 99 %, also eine Wahrscheinlichkeit von 0,99, mit dem beschriebenen Grenzwert, so ist das Produkt 2 bzw. das nachfolgende zweite Produkt 3 stets so ausgelegt, dass kein Ausfall eintreten sollte, der auf eine reine Berechnung der Produktfunktionen zurückzuführen ist.

Durch diese Methode kann in nachhaltiger Form ein guter Beitrag zur Materialeinsparung erfolgen. Das beschriebene Verfahren ist gegenüber dem Stand der Technik ressourcenschonend.

### Bezugszeichenliste

- 2: Produkt
- 3: zweites Produkt
- 4: Einzelprodukt
- 5: zweites Einzelprodukt
- 6: Vorprodukt
- 8: Konstruktionsdaten
- 10: Kommunikationsschnittstelle
- 12: digitale Repräsentation
- 14: Materialdaten
- 16: Prozessdaten
- 18: Datenverbindung
- 20: Lebenszyklusinformationen
- 22: Produktdaten
- 24: Produktbereiche
- 26: Lastenheft
- 28: Pflichtenheft
- 30: CAD
- 32: Herstellungsprozess
- 34: Betrieb
- 36: Reparatur
- 38: Recycling
- 40: Cloud
- 42: Computer
- 44: Datenfluss zur Repräsentation
- 46: Datenfluss Adaption
- 48: Waschmaschine

## Patentansprüche

1. Verfahren zum Lebensdauermanagement eines Produktes (2), umfassend folgende Schritte:
- Erstellen von Konstruktionsdaten (8) für das Produkt (2),
- Herstellen wenigstens eines Einzelproduktes (4) aus Vorprodukten (6) basierend auf den Konstruktionsdaten (8), wobei dem Einzelprodukt (4) eine Kommunikationsschnittstelle (10) beigefügt wird,
- Erstellen einer digitalen Repräsentation (12) des Produktes umfassend mindestens ein Simulationsmodell,
- Einbringen von Materialdaten (14) und Prozessdaten (16), aus Vorprodukten (6) und dem Einzelprodukt (4) sowie auch der Konstruktionsdaten (8) in die Repräsentation (12),
- Herstellen einer Datenverbindung (18) zwischen dem Einzelprodukt (4) und der Repräsentation (12),
- Übertragen von Lebenszyklusinformationen (20) des Einzelproduktes (4) während seines Lebenszyklus an die Repräsentation (12), wobei die Summe der Lebenszyklusinformationen (20) der Einzelprodukte (4) zusammen mit den Materialdaten (14), Prozessdaten (16) und Konstruktionsdaten (8) Produktdaten (22) ergeben,
wobei weiterhin die digitale Repräsentation (12) verwendet wird, um folgende Schritte durchzuführen:
- Berechnung von Materialanforderungen mittels des Simulationsmodells für definierte Produktfunktionen unter Verwendung der Lebenszyklusinformationen (20)
- Festlegen eines physikalischen Grenzwertes zur Gewährleistung der Produktfunktionen auf Basis der berechneten Materialanforderungen
- Ermittlung des Materialbedarfs an Produktbereichen (24) zur Gewährleistung des Grenzwertes
- Erstellen von Produktdaten eines zweiten Produktes (3) mit dem ermittelten Materialbedarf,
- Herstellen eines zweiten Einzelproduktes (5) auf Basis der Produktdaten des zweiten Produktes.

2. Verfahren nach Anspruch 1, **dadurch gekennzeichnet, dass** der Grenzwert mit einem für die Anwendung vorgegebenen Sicherheitsfaktor berechnet wird.

3. Verfahren nach Anspruch 2, **dadurch gekennzeichnet, dass** ein Zahlenwert für den Grenzwert das 1,3fache bis 1,9fache eines Wertes der berechneten Materialanforderung beträgt.

4. Verfahren nach Anspruch 1 bis 3, **dadurch gekennzeichnet, dass** in der digitalen Repräsentation (12) ein Kriterium hinterlegt ist, wonach die Materialanforderungen in der Art berechnet werden, dass die jeweilige definierte Produktfunktion mindestens für 99% der Einzelprodukte (4, 5) während er Lebensdauer erfüllt wird.

5. Verfahren nach einem der vorhergehenden Ansprüche, **dadurch gekennzeichnet, dass** die Materialanforderungen in physikalischen Größen der Biegefestigkeit, der Schwingungsfestigkeit, der Abriebfestigkeit, der maximalen anwendbaren Temperatur, der Wärmeleitfähigkeit und/oder der elektrischen Leitfähigkeit bestimmt werden.

6. Verfahren nach einem der vorhergehenden Ansprüche, **dadurch gekennzeichnet, dass** der Materialbedarf in Form der Materialdicke bestimmt wird.

7. Verfahren nach einem der vorhergehenden Ansprüche, **dadurch gekennzeichnet, dass** der Materialbedarf in Form der Werkstoffeigenschaften bestimmt wird.
